# EUROPÄISCHE PATENTSCHRIFT

(11) **EP 3 215 374 B1**
(45) Veröffentlichungstag und Bekanntmachung des Hinweises auf die Patenterteilung: **31.10.2018**
(21) Anmeldenummer: 15748017.9
(22) Anmeldetag: 03.08.2015
(51) Int. Cl.: B60C 9/20

(54) **FAHRZEUGLUFTREIFEN**
VEHICLE TYRES
PNEUMATIQUE DE VÉHICULE

(30) Priorität: 05.11.2014 DE 102014222555
(43) Veröffentlichungstag der Anmeldung: 13.09.2017
(73) Patentinhaber: Continental Reifen Deutschland GmbH, 30165 Hannover (DE)
(72) Erfinder: GEHLAUF, Matthias, 31319 Sehnde (DE); LACKO, Michal, 020 01 Puchov (SK); WACHMANN, Fabian, 30419 Hannover (DE)
(74) Vertreter: Finger, Karsten
(86) Internationale Anmeldenummer: PCT/EP2015/067762
(87) Internationale Veröffentlichungsnummer: WO 2016/071013

(56) Entgegenhaltungen:
- WO-A1-2011/131383
- DE-A1-102011 001 228
- US-A1- 2007 113 946

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, wobei die erste Gürtellage und die dritte Gürtellage Arbeitslagen sind, bei denen die Festigkeitsträger der ersten Gürtellage in ihrer Ausrichtung einen Winkel α zur Umfangsrichtung U mit 10°≤α≤45° und die Festigkeitsträger der dritten Gürtellage in ihrer Ausrichtung jeweils einen Winkel γ zur Umfangsrichtung U mit 10°≤γ≤45° einschließen, wobei in Umfangsrichtung U des Fahrzeugreifens gesehen die Festigkeitsträger der ersten Gürtellage eine entgegengesetzte axiale Neigungsrichtung zu den Festigkeitsträgern der dritten Gürtellage aufweisen, und wobei die Festigkeitsträger der zweiten Gürtellage in ihrer Ausrichtung einen Winkel β zur Umfangsrichtung U mit 0°≤β≤5° einschließen.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Diese Konfiguration mit zwei Arbeitslagen und darunter angeordneter Sperrlage bietet eine Möglichkeit zur ersten Optimierung des Abriebverhaltens. Darüber hinaus ist ein Wandern von Rissen aus der unteren Arbeitslage in die Karkasse trotz Sperrlage in geringem Maße noch möglich. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen dennoch eine beschränkte Umfangssteifigkeit auf, die zu überhöhtem ungleichmäßigem Abrieb des Reifens führen kann.
Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte Nullgrad-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Die innere Arbeitslage ist jedoch mit verbleibender Beweglichkeit ausgebildet. Dies kann Haltbarkeit und Abrieb auch noch unbeabsichtigt beeinträchtigen.

Darüber hinaus ist gelegentlich - beispielsweise aus der gattungsbildenden WO2011/131383A1 - eine Ausbildung eines Nutzfahrzeugluftreifens mit einer Vier-Lagen-Gürtelanordnung vorgeschlagen worden mit einer radial inneren Sperrlage mit Stahlkorden, die einen Winkel von 50° zur Umfangsrichtung einschließen. Radial außerhalb der Sperrlage sind zwei Arbeitslagen ausgebildet. Eine 0°-Lage ist radial zwischen den beiden Arbeitslagen ausgebildet ist. Die beiden Arbeitslagen sind bei diesen Ausbildungen weiterhin im Kreuzverband ausgebildet und ihre Stahlkorde sind mit Winkeln von jeweils 20° zur Umfangsrichtung ausgerichtet. Es wurde gelegentlich- beispielsweise aus der WO2011/131383A1 - auch vorgeschlagen eine Ausbildung eines Nutzfahrzeugluftreifens mit einer Vier-Lagen-Gürtelanordnung mit zwei Arbeitslagen zwischen denen eine 0°-Lage ausgebildet ist und bei dem auf der äußeren Arbeitslage eine zusätzliche Gürtellage als Abdecklage ausgebildet ist, wobei die Stahlkorde der zusätzlichen Abdecklage in einer Ausführung mit Winkeln zwischen 15° und 45° zur Umfangsrichtung und in einer anderen Ausführung mit Winkeln zwischen 0° und 5° ausgebildet sind. Die beiden Arbeitslagen sind bei diesen Ausbildungen weiterhin im Kreuzverband ausgebildet und ihre Stahlkorde sind mit Winkeln von jeweils 20° zur Umfangsrichtung ausgerichtet. Derartige Ausbildungen ermöglichen eine hohe Umfangssteifigkeit und gegenüber einem herkömmlichen Nutzfahrzeugluftreifen eine verbesserte Haltbarkeit und ein verbessertes Abriebbild.

Der Erfindung liegt die Aufgabe zugrunde einen derartigen Fahrzeugluftreifen für Nutzfahrzeuge mit wenigstens vier Gürtellagen zu schaffen, bei dem in einfacher Weise unter Nutzung der Vorteile der Ausbildung eines Vierlagengürtels mit zwei Arbeitslagen und einer dazwischen positionierten Nullgradlage hinsichtlich Haltbarkeit und Abrieb ohne zusätzlichen die Abriebperformance weiter verbessert werden kann.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, wobei die erste Gürtellage und die dritte Gürtellage Arbeitslagen sind, bei denen die Festigkeitsträger der ersten Gürtellage in ihrer Ausrichtung einen Winkel α zur Umfangsrichtung U mit 10°≤α≤45° und die Festigkeitsträger der dritten Gürtellage in ihrer Ausrichtung jeweils einen Winkel γ zur Umfangsrichtung U mit 10°≤γ≤45° einschließen, wobei in Umfangsrichtung U des Fahrzeugreifens gesehen die Festigkeitsträger der ersten Gürtellage eine entgegengesetzte axiale Neigungsrichtung zu den Festigkeitsträgern der dritten Gürtellage aufweisen, und wobei die Festigkeitsträger der zweiten Gürtellage in ihrer Ausrichtung einen Winkel β zur Umfangsrichtung U mit 0°≤β≤5° einschließen, gemäß den Merkmalen von Anspruch 1 gelöst, bei dem die Festigkeitsträger der vierten Gürtellage in ihrer Ausrichtung einen Winkel ε zur Umfangsrichtung U mit 50°≤ε≤52° einschließen.

Die Ausbildung ermöglicht die Beibehaltung der hinsichtlich guter Kraftübertragung in Umfangs- und Querrichtung und geringem Abrieb bei hoher Haltbarkeit vorteilhaften Ausbildung mit zwei Arbeitslagen und radial zwischen geordneter Nullgradlage und mit zusätzlicher radial außen angeordneten vierten Gürtellage. Durch Ausbildung der Festigkeitsträgern der vierten, radial äußeren Gürtellage mit einem Winkel ε zur Umfangsrichtung U mit 50°≤ε <52° hat sich in Versuchen überraschender Weise eine besonders günstige Abriebsperformance herausgestellt. Das Abriebverhalten ist deutlich vergleichmäßigt.

Besonders vorteilhaft ist die Ausbildung eines Fahrzeugluftreifens gemäß den Merkmalen von Anspruch 2, wobei der Winkel α zur Umfangsrichtung U mit 14°≤α≤23° - insbesondere α=18°- und der Winkel γ zur Umfangsrichtung U mit 14°≤γ≤23°-insbesondere γ =18°- ausgebildet ist. Hierdurch kann in einfacher Weise eine hohe Umfangssteifigkeit des Gürtels umgesetzt und gute Abriebeigenschaften und Endurance-Eigenschaften sichergestellt werden bei Begrenzung des Gürtelwachstums.

Besonders vorteilhaft ist die Ausbildung eines Fahrzeugluftreifens gemäß den Merkmalen von Anspruch 3, wobei in Umfangsrichtung U gesehen die Festigkeitsträger der dritten Gürtellage und die Festigkeitsträger der vierten Gürtellage die gleiche axiale Neigungsrichtung aufweisen. Untersuchungen haben ergeben, dass hierdurch eine besonders günstige Abriebsperformance umgesetzt werden kann. Das Abriebverhalten ist deutlich vergleichmäßigt.

Besonders vorteilhaft ist die Ausbildung eines Fahrzeugluftreifens gemäß den Merkmalen von Anspruch 4, wobei die erste Gürtellage in ihrer axialen Erstreckung im Fahrzeugluftreifen größer ausgebildet ist als alle anderen Gürtellagen des Gürtels. Die axiale Staffelung der Gürtellagenenden begünstigt eine Entkopplung der Gürtellagenenden, wodurch Steifigkeitssprünge vermieden, Scher-Kräfte reduziert und gute Endurance-Eigenschaften begünstigt werden.

Besonders vorteilhaft ist die Ausbildung eines Fahrzeugluftreifens gemäß den Merkmalen von Anspruch 5, wobei die zweite Gürtellage in ihrer axialen Erstreckung im Fahrzeugluftreifen kleiner ausgebildet ist als die erste und die dritte Gürtellage und mindestens 0,9mal und maximal l,lmal so breit wie die axiale Erstreckung der vierten Gürtellage des Gürtels. Dies ermöglicht einen gleichmäßigen Steifigkeitsanstieg von Gürtelkante zur Gürtelmitte, wodurch guter Abrieb und lange, strukturelle Haltbarkeit weiter begünstigt werden. In einfacher Weise kann dabei die Umfangssteifigkeit des Gürtels verbessert und die Übertragung von Umfangskräften durch den Gürtel begünstigt werden.

Besonders vorteilhaft ist die Ausbildung eines Fahrzeugluftreifens gemäß den Merkmalen von Anspruch 6, wobei die Festigkeitsträger der ersten Gürtellage und die Festigkeitsträger der dritten Gürtellage Stahlkorde sind. Hierdurch kann in einfacher Weise unter Nutzung bekannter Adhäsionsmechanismen bei der Gummierung der Festigkeitsträger, unter Nutzung herkömmlicher Herstellungsverfahren eine hohe Steifigkeit des Gürtels umgesetzt werden.

Besonders vorteilhaft ist die Ausbildung eines Fahrzeugluftreifens gemäß den Merkmalen von Anspruch 7, wobei die Festigkeitsträger der beiden Arbeitslagen im Reifen dehnbar ausgebildet sind mit einer Dehnung D von D ≥ 0,2% bei 10% der Bruchkraft.

Besonders vorteilhaft ist die Ausbildung eines Fahrzeugluftreifens gemäß den Merkmalen von Anspruch 8, wobei die Festigkeitsträger der zweiten Gürtellage Festigkeitsträger aus Stahl sind. Dies ermöglicht in einfacher Weise unter Nutzung bekannter Adhäsionsmechanismen bei der Gummierung der Festigkeitsträger, eine einfache kostengünstige Herstellung unter Nutzung der gegenüber anderen Materialien hohen E-Moduli von Stahlkorden.

Besonders vorteilhaft ist die Ausbildung eines Fahrzeugluftreifens gemäß den Merkmalen von Anspruch 9, wobei die Festigkeitsträger der zweiten Gürtellage Stahlkorde sind, die bei 10% der Bruchkraft eine Dehnung D mit D≥ 0,2 % - insbesondere mit D ≥1% - aufweisen. Die Ausbildung ermöglicht eine optimierte Nutzung und Auslegung des Bauprozesses. Dabei können durch die Erhebung des Gürtels im Rahmen des Bauprozesses und in der Vulkanisationspresse die gewünschten Spannungen der Lage optimal eingestellt werden. Im ausgeheizten Zustand können die Festigkeitsträger hierdurch mit der gewünschten, sinnvolle Zugsteifigkeit zur Erzielung der optimierten Umfangsteifigkeit des Gürtels ausgebildet eingestellt werden.

Besonders vorteilhaft ist die Ausbildung eines Fahrzeugluftreifens gemäß den Merkmalen von Anspruch 10, wobei die Festigkeitsträger der vierten Gürtellage Stahlkorde sind. Hierdurch kann in einfacher Weise unter Nutzung bekannter Adhäsionsmechanismen bei der Gummierung der Festigkeitsträger, hohe Schnittbeständigkeit und Kompressionssteifigkeit des Gürtels umgesetzt werden.

Die Erfindung wird im Folgenden an Hand der in den Fig. 1 bis Fig.3 dargestellten Ausführungsbeispiele eines Nutzfahrzeugluftreifens radialer Bauart erläutert. Darin zeigen
- Fig.1: die Querschnittdarstellung eines Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind,
- Fig.3: ein qualitatives Diagramm.

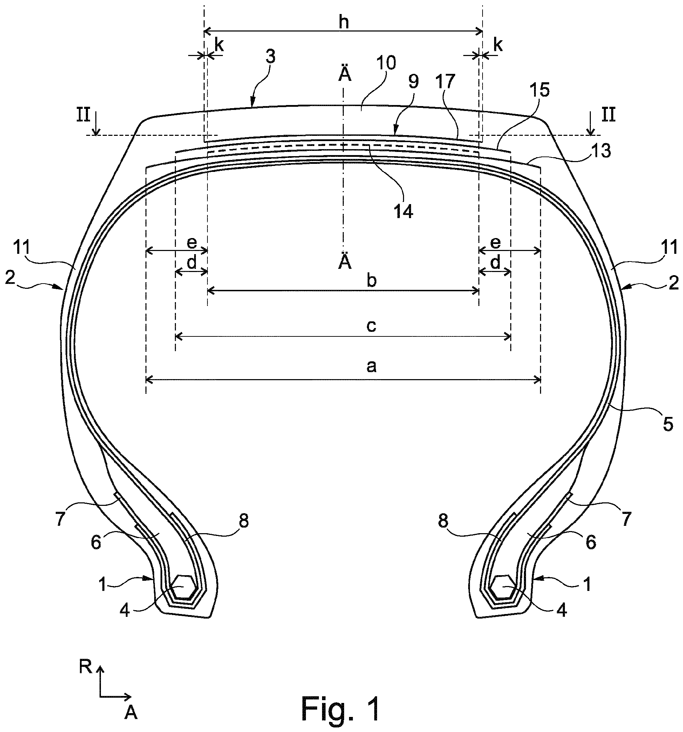

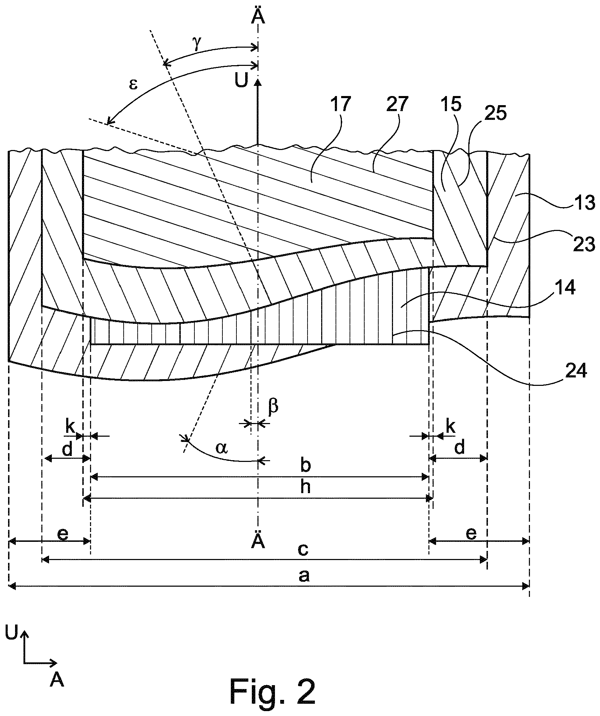

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich (Kopfbereich) 3. Die Seitenwände sind an ihrem in radialer Richtung nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone (des Reifenkopfes) 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus vier in radialer Richtung R von innen nach außen übereinander und aufeinanderliegend angeordneten Gürtellagen 13,14, 15 und 17 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die in radialer Richtung R am weitesten innen angeordnete Gürtellage 13 des Gürtels bildet die erste Gürtellage 13. Die in radialer Richtung R außerhalb der ersten Gürtellage 13 auf der ersten Gürtellage 13 angeordnete Gürtellage 14 bildet die zweite Gürtellage 14. Die in radialer Richtung R außerhalb der zweiten Gürtellage 14 auf der zweiten Gürtellage 14 angeordnete Gürtellage 15 bildet die dritte Gürtellage 15. Die in radialer Richtung R außerhalb der dritten Gürtellage 15 auf der dritten Gürtellage 15 angeordnete Gürtellage 17 bildet die vierte Gürtellage 17.

Die Gürtellage 13 und die Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. In einer besonderen Ausführung ist α mit 14° ≤ α ≤ 23°gewählt.

Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. In einer besonderen Ausführung ist γ mit 14° ≤ γ ≤ 23°gewählt.

Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet.

Die in radialer Richtung R zwischen den beiden Gürtellagen 13 und 15 ausgebildete zweite Gürtellage 14 erstreckt sich in Umfangsrichtung U über den gesamten Umfang des Fahrzeugluftreifens und in axialer Richtung A von linker Reifenschulter zur rechten Reifenschulter - zumindest in Teilabschnitten in Berührkontakt zu den beiden Gürtellagen 13 und 15 - und ist als Nullgrad-Lage ausgebildet. Hierzu ist die Gürtellage 14 aus parallelen fadenförmigen in Gummi eingebetteten Festigkeitsträgern 24 ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind.

Die in radialer Richtung R außerhalb der dritten Gürtellage 15 angeordneten vierte Gürtellage 17 erstreckt sich in Umfangsrichtung U über den gesamten Umfang des Fahrzeugluftreifens und in axialer Richtung A des Fahrzeugluftreifens von linker Reifenschulter bis zur rechten Reifenschulter. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 50°≤ε<52°, beispielsweise mit ε = 50°.

Die Festigkeitsträger 27 der vierten Gürtellage 17 sind in einer Ausführung - wie in Fig.2 dargestellt - mit einer längs der Erstreckung in Umfangsrichtung U des Reifens gesehen gleichen axialen Neigungsrichtung wie die Festigkeitsträger 25 der dritten Gürtellage 15 und somit mit einer entgegengesetzten axialen Neigungsrichtung wie die Festigkeitsträger 23 der ersten Gürtellage 13 ausgerichtet.

Alle vier Gürtellagen 13,14,15 und 17 erstrecken sich zu beiden axialen Seiten jeweils bis in eine Position in der jeweiligen Reifenschulter. Die Gürtellage 17 ist zumindest über einen Teil ihrer axialen Erstreckung in direktem Berührkontakt zu der unter ihr angeordneten dritten Gürtellage (obere Arbeitslage) 15.

Die zweite Gürtellage (0°-Lage) 14 erstreckt sich in axialer Richtung A über eine axiale Breite b, die erste Gürtellage (untere Arbeitslage) 13 erstreckt sich in axialer Richtung A über eine axiale Breite a und die dritte Gürtellage (obere Arbeitslage) 15 erstreckt sich in axialer Richtung A über eine axiale Breite c im Reifen. Die vierte Gürtellage 17 erstreckt sich in axialer Richtung A über eine axiale Breite h im Reifen. Die Erstreckungsbreiten a, c, b und h sind dabei mit a > c > h und c > b und (0,9h)≤b≤ (1,1h) gewählt. Dabei erstreckt sich zu beiden axialen Seiten der zweiten Gürtellage 14 die erste Gürtellage 13 um eine axiale Erstreckungslänge e über die axiale Position des jeweiligen Gürtelrandes der ersten Gürtellage 14 hinaus. Ebenso erstreckt sich die dritte Gürtellage 15 in beide axiale Richtungen jeweils um eine axiale Erstreckungslänge d über die axiale Position des jeweiligen Gürtelrandes der zweiten Gürtellage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet.

Die Gürtellage 17 erstreckt sich längs der axialen Erstreckung der dritten Gürtellage (radial äußere Arbeitslage) 15 und endet in axialer Richtung A mit ihren beiden Gürtellagenrändern jeweils in einer axialen Position zwischen der axialen Position des nächstliegenden Gürtellagenrandes der zweiten Gürtellage 14 und der axialen Position des nächstliegenden Gürtellagenrandes der radial äußeren Arbeitslage 15 im axialen Abstand k vom Gürtellagenrand der zweiten Gürtellage 14 mit k < d < e und mit k≥0mm.

Im dargestellten Ausführungsbeispiel ist h>b und k>0mm gewählt.

Die Festigkeitsträger 27 sind Stahlkorde bekannter Art, beispielsweise des Typs "1+5", des Typs "3+6", des Typs "3+8" oder des Typs "3+9".

Die Festigkeitsträger 23 und 25 der beiden Arbeitslagen 13 und 15 sind dehnbare Stahlkorde bekannter Art, die bei Belastung auf Zug eine Bruchkraft F von F>2500N und bei 10% der Bruchkraft eine Dehnung D von D≥0,2% - beispielsweise mit 0,28% ≤ D ≤ 0,32% -aufweisen. Die Dehnung D der Festigkeitsträger ist dabei diejenige Dehnung, die beim vulkanisierten Reifen an dem von der Lage extrahierten Festigkeitsträger bestimmt wird. Die Messung der Dehnung erfolgt an Festigkeitsträgern, die mit ihrer vollen Länge dem fertig vulkanisierten Reifen entnommen sind. Der Festigkeitsträger wird zur Messung soweit von Gummiresten befreit, dass der Festigkeitsträger mit der am Festigkeitsträger verbleibender Gummimenge keinen Durchmesser aufweist, der größer ist als der 1,5-fache maximale Außendurchmesser des ungummierten Festigkeitsträgers. Die Bestimmung der Dehnung erfolgt gemäß der ASTM D 2969 - 04.

Die Festigkeitsträger 23 und 25 sind beispielsweise Stahlkorde des Typs "3+8x0,35HT" mit einer Bruchkraft F, welche ca. 3000N beträgt, und mit einer Dehnung D von D>0,2% bei 10% der Bruchkraft.

Die Festigkeitsträger 24 sind in einer Ausführung Stahlkorde bekannter Art. In einer anderen Ausführung sind die Festigkeitsträger 24 Stahlkorde, die bei 10% der Bruchkraft eine Dehnung D mit D ≥ 0,2% - beispielsweise mit D = 0,5% - aufweisen. In einer Ausführung sind die Festigkeitsträger 24 Stahlkorde, die bei 10% der Bruchkraft eine Dehnung D mit D ≥ 1% - beispielsweise mit D = 1,3% - aufweisen.

Die Festigkeitsträger 24 sind beispielsweise Stahlkorde des Typs "3x7 HEHT".

In einem Ausführungsbeispiel ist β = 3°, α = 18°, γ = 18°, ε = 50°, d = 11 mm, k=8mm und e = 15 mm gewählt.

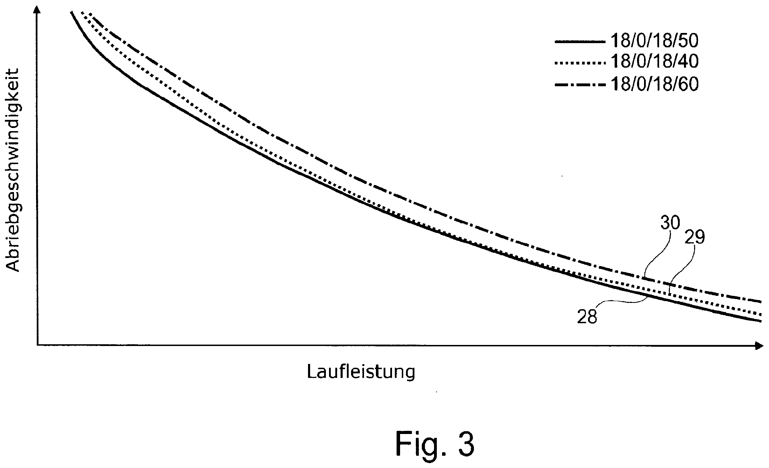

Fig.3 zeigt ein im Rahmen von Abriebsimulationen ermittelten, qualitativen Diagramms zur Darstellung der über die Laufleistung eines gemäß den Fig.1 und 2 ausgebildeten Nutzfahrzeugreifens mit den vier Gürtellagen 13,14,15 und 17 in Abhängigkeit vom gewählten Winkel ε der Festigkeitsträger 27 veränderten Abriebgeschwindigkeit und damit der relativen, qualitativen Veränderungen der gemessenen Abriebperformance. In der Abszisse ist von links nach rechts die zunehmende Laufleistung (wear distance) und in der Ordinate von unten nach oben die zunehmende Abriebgeschwindigkeit (specific wear volume loss) eingetragen. Die Simulation wurde für Nutzfahrzeugreifen durchgeführt, die sich nur durch den Winkel ε unterscheiden. Die Winkel α, β und γ sind mit α = 18°, β = 0° und γ = 18° gewählt. Im Diagramm ist mit durchgezogener Linie 28 die Kurve der über die Laufleistung veränderten Abriebgeschwindigkeit bei Wahl des Winkels ε mit ε = 50° dargestellt. Die gepunktete Linie 29 bildet die Kurve der über die Laufleistung veränderten Abriebgeschwindigkeit bei Wahl des Winkels ε mit ε = 40°. Die strich-punktierte Linie 30 bildet die Kurve der über die Laufleistung veränderten Abriebgeschwindigkeit bei Wahl des Winkels ε mit ε = 60°. Dabei ist deutlich zu erkennen, dass bei Wahl des Winkel ε mit ε = 50° über die gesamte Laufleistung hinweg die Abriebgeschwindigkeit am geringsten ist. Die Linie 29 nähert sich zwar in einem kurzen Erstreckungsabschnitt der Abszisse der Kurve 28. Über weite Erstreckungsabschnitte der Abszisse ist die Abriebgeschwindigkeit der Kurve 28 jedoch auch deutlich erkennbar geringer als die der Kurven 29. Somit ist der mit Winkel ε = 50° ausgebildete NFZ-Reifen über die Lebensdauer des Reifenprofils mit der geringsten Abriebgeschwindigkeit ausgebildet. Die mögliche maximale Laufleistung dieses Nutzfahrzeugreifens ist hierdurch am größten. Außerdem ist nach bestimmten vorgegebenen Laufleistungen jeweils die verbleibende Restprofiltiefe dieses Reifens am größten.

In den oben im Zusammenhang mit den Figuren 1 bis 2 genannten Ausführungsbeispielen sind die Festigkeitsträger 27 Stahlkorde. In anderer, nicht dargestellter Ausführung sind die Festigkeitsträger 27 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

In anderer, nicht dargestellter Ausführung sind auch die Festigkeitsträger 23 und/oder die Festigkeitsträger 24 und/oder Festigkeitsträger 25 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

Die Winkel α, β, γ, ε bilden jeweils zumindest den in der Position der Äquatorebene Ä-Ä des Reifens ermittelten Neigungswinkel des jeweiligen Festigkeitsträgers.

### Bezugszeichenliste

- 1: Wulstbereich
- 2: Seitenwand
- 3: Kronenbereich (Kopfbereich)
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger
- 28: Kurve der Abriebgeschwindigkeit
- 29: Kurve der Abriebgeschwindigkeit
- 30: Kurve der Abriebgeschwindigkeit

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens vier von radial innen nach radial außen auf einander liegend angeordneten Gürtellagen (13, 14, 15, 17) ausgebildet ist, wobei die in radialer Richtung R am weitesten innen angeordnete, erste Gürtellage (13) mit parallelen in Gummi eingebetteten Festigkeitsträgern (23), die auf der ersten Gürtellage (13) angeordnete zweite Gürtellage (14) mit parallelen in Gummi eingebetteten Festigkeitsträgern (24), die auf der zweiten Gürtellage (14) angeordnete dritte Gürtellage (15) mit parallelen in Gummi eingebetteten Festigkeitsträgern (25) und die auf der dritten Gürtellage (15) angeordnete vierte Gürtellage (17) mit parallelen in Gummi eingebetteten Festigkeitsträgern (27) ausgebildet ist, wobei die erste Gürtellage (13) und die dritte Gürtellage (15) Arbeitslagen sind, bei denen die Festigkeitsträger (23) der ersten Gürtellage (13) in ihrer Ausrichtung einen Winkel α zur Umfangsrichtung U mit 10°≤α≤45° und die Festigkeitsträger (25) der dritten Gürtellage (15) in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger (23) der ersten Gürtellage (13) eine entgegengesetzte axiale Neigungsrichtung zu den Festigkeitsträgern (25) der dritten Gürtellage (15) aufweisen, und wobei die Festigkeitsträger (24) der zweiten Gürtellage (14) in ihrer Ausrichtung einen Winkel β zur Umfangsrichtung U mit 0°≤β≤5° einschließen,
**dadurch gekennzeichnet,**
**dass** die Festigkeitsträger (27) der vierten Gürtellage (17) in ihrer Ausrichtung einen Winkel ε zur Umfangsrichtung U mit 50°≤ε≤52° einschließen.

2. Fahrzeugluftreifen gemäß den Merkmalen von Anspruch 1,
wobei der Winkel α zur Umfangsrichtung U mit 14°≤α≤23° - insbesondere α=18°- und der Winkel γ zur Umfangsrichtung U mit 14°≤γ≤23°- insbesondere γ =18°-ausgebildet ist.

3. Fahrzeugluftreifen gemäß den Merkmalen von Anspruch 1 oder 2,
wobei in Umfangsrichtung U gesehen die Festigkeitsträger (25) der dritten Gürtellage (15) und die Festigkeitsträger (27) der vierten Gürtellage (17) die gleiche axiale Neigungsrichtung aufweisen.

4. Fahrzeugluftreifen gemäß den Merkmalen von Anspruch 1,
wobei die erste Gürtellage (13) in ihrer axialen Erstreckung im Fahrzeugluftreifen größer ausgebildet ist als alle anderen Gürtellagen (14,15,17) des Gürtels.

5. Fahrzeugluftreifen gemäß den Merkmalen von einem der vorangegangenen Ansprüche,
wobei die zweite Gürtellage (14) in ihrer axialen Erstreckung im Fahrzeugluftreifen kleiner ausgebildet ist als die erste und die dritte Gürtellage (13,15) und mindestens 0,9mal und maximal l,lmal so breit wie die axiale Erstreckung der vierten Gürtellage (17) des Gürtels.

6. Fahrzeugluftreifen gemäß den Merkmalen von einem oder mehreren der vorangegangenen Ansprüche,
wobei die Festigkeitsträger (23) der ersten Gürtellage (13) und die Festigkeitsträger (25) der dritten Gürtellage (15) Stahlkorde sind.

7. Fahrzeugluftreifen gemäß den Merkmalen von einem oder mehreren der vorangegangenen Ansprüche,
wobei die Festigkeitsträger (23, 25) der beiden Arbeitslagen (13, 15) im Reifen dehnbar ausgebildet sind mit einer Dehnung D von D ≥ 0,2% bei 10% der Bruchkraft.

8. Fahrzeugluftreifen gemäß den Merkmalen von einem oder mehreren der vorangegangenen Ansprüche,
wobei die Festigkeitsträger (24) der zweiten Gürtellage (14) Festigkeitsträger aus Stahl sind.

9. Fahrzeugluftreifen gemäß den Merkmalen von Anspruch einem oder mehreren der vorangegangenen Ansprüche,
wobei die Festigkeitsträger (24) der zweiten Gürtellage (14) Stahlkorde sind, die bei 10% der Bruchkraft eine Dehnung D mit D≥ 0,2 % - insbesondere mit D ≥1% - aufweisen.

10. Fahrzeugluftreifen gemäß den Merkmalen von einem oder mehreren der vorangegangenen Ansprüche,
wobei die Festigkeitsträger (27) der vierten Gürtellage (17) Stahlkorde sind.

## Claims

1. Pneumatic vehicle tyre for utility vehicles, having a carcass (5), having a belt (9) built up radially outside the carcass (5), and having a profiled tread (10) built up on the belt (9) radially outside the belt (9), wherein the belt (9) is formed from at least four belt plies (13, 14, 15, 17) arranged so as to lie one on top of the other from radially inside to radially outside, wherein the first belt ply (13) arranged furthest inward in a radial direction R is formed with parallel strengthening members (23) embedded in rubber, the second belt ply (14) arranged on the first belt ply (13) is formed with parallel strengthening members (24) embedded in rubber, the third belt ply (15) arranged on the second belt ply (14) is formed with parallel strengthening members (25) embedded in rubber, and the fourth belt ply (17) arranged on the third belt ply (15) is formed with parallel strengthening members (27) embedded in rubber, wherein the first belt ply (13) and the third belt ply (15) are working plies, in the case of which the strengthening members (23) of the first belt ply (13) enclose, in their orientation, an angle α with respect to the circumferential direction U, where 10°≤α≤45°, and the strengthening members (25) of the third belt ply (15) each enclose, in their orientation, an angle γ with respect to the circumferential direction U, where 10°≤γ≤45°, wherein, as viewed in the circumferential direction U of the vehicle tyre, the strengthening members (23) of the first belt ply (13) have an opposite axial direction of inclination in relation to the strengthening members (25) of the third belt ply (15), and wherein the strengthening members (24) of the second belt ply (14) enclose, in their orientation, an angle β with respect to the circumferential direction U, where 0°≤β≤5° **characterized**
**in that** the strengthening members (27) of the fourth belt ply (17) enclose, in their orientation, an angle ε with respect to the circumferential direction U, where 50°≤ε≤52°.

2. Pneumatic vehicle tyre according to the features of Claim 1,
wherein the angle α with respect to the circumferential direction U is configured such that 14°≤α≤23° - in particular α=18° - and the angle γ with respect to the circumferential direction U is configured such that 14°≤γ≤23° - in particular γ=18°.

3. Pneumatic vehicle tyre according to the features of Claim 1 or 2,
wherein, as viewed in the circumferential direction U, the strengthening members (25) of the third belt ply (15) and the strengthening members (27) of the fourth belt ply (17) have the same axial direction of inclination.

4. Pneumatic vehicle tyre according to the features of Claim 1,
wherein the first belt ply (13) is formed so as to be larger in its axial extent in the pneumatic vehicle tyre than all of the other belt plies (14, 15, 17) of the belt.

5. Pneumatic vehicle tyre according to the features of one of the preceding claims,
wherein the second belt ply (14) is formed so as to be smaller in its axial extent in the pneumatic vehicle tyre than the first and the third belt ply (13, 15), and is at least 0.9 times and at most 1.1 times as wide as the axial extent of the fourth belt ply (17) of the belt.

6. Pneumatic vehicle tyre according to the features of one or more of the preceding claims,
wherein the strengthening members (23) of the first belt ply (13) and the strengthening members (25) of the third belt ply (15) are steel cords.

7. Pneumatic vehicle tyre according to the features of one or more of the preceding claims,
wherein the strengthening members (23, 25) of the two working plies (13, 15) in the tyre are of extensible form, with an elongation D of D ≥ 0.2% at 10% of the breaking force.

8. Pneumatic vehicle tyre according to the features of one or more of the preceding claims,
wherein the strengthening members (24) of the second belt ply (14) are strengthening members composed of steel.

9. Pneumatic vehicle tyre according to the features of Claim one or more of the preceding claims,
wherein the strengthening members (24) of the second belt ply (14) are steel cords which have an elongation D of D ≥ 0.2% - in particular of D ≥ 1% - at 10% of the breaking force.

10. Pneumatic vehicle tyre according to the features of one or more of the preceding claims,
wherein the strengthening members (27) of the fourth belt ply (17) are steel cords.

## Revendications

1. Pneumatique de véhicule pour véhicules utilitaires, comprenant une carcasse (5), une ceinture (9) de construction radiale à l'extérieur de la carcasse (5) et une bande de roulement profilée (10) construite sur la ceinture (9) radialement à l'extérieur de la ceinture (9), la ceinture (9) étant constituée d'au moins quatre couches de ceinture (13, 14, 15, 17) disposées les unes au-dessus des autres radialement de l'intérieur vers l'extérieur, la première couche de ceinture (13) disposée la plus à l'intérieur dans la direction radiale R étant réalisée avec des renforts (23) parallèles noyés dans du caoutchouc, la deuxième couche de ceinture (14) disposée sur la première couche de ceinture (13) étant réalisée avec des renforts (24) parallèles noyés dans du caoutchouc, la troisième couche de ceinture (15) disposée sur la deuxième couche de ceinture (14) étant réalisée avec des renforts (25) parallèles noyés dans du caoutchouc et la quatrième couche de ceinture (17) disposée sur la troisième couche de ceinture (15) étant réalisée avec des renforts (27) parallèles noyés dans du caoutchouc, la première couche de ceinture (13) et la troisième couche de ceinture (15) étant des couches de travail, dans lesquelles les renforts (23) de la première couche de ceinture (13) forment dans leur orientation un angle α par rapport à la direction périphérique U avec 10° ≤ α ≤ 45° et les renforts (25) de la troisième couche de ceinture (15) forment dans leur orientation à chaque fois un angle γ avec la direction périphérique U avec 10° ≤ γ ≤ 45°, les renforts (23) de la première couche de ceinture (13), vus dans la direction périphérique U du pneu du véhicule, présentant une direction d'inclinaison axiale opposée aux renforts (25) de la troisième couche de ceinture (15), et les renforts (24) de la deuxième couche de ceinture (14) formant, dans leur orientation, un angle β avec la direction périphérique U, avec 0° ≤ β ≤ 5°,
**caractérisé en ce que**
les renforts (27) de la quatrième couche de ceinture (17) forment, dans leur orientation, un angle ε avec la direction périphérique U, avec 50° ≤ ε ≤ 52°.

2. Pneumatique de véhicule selon les caractéristiques de la revendication 1,
dans lequel l'angle α avec la direction périphérique U réalisé avec 14° ≤ α ≤ 23°, en particulier α = 18°, et l'angle γ avec la direction périphérique U est réalisé avec 14° ≤ γ ≤ 23°, en particulier γ = 18°.

3. Pneumatique de véhicule selon les caractéristiques de la revendication 1 ou 2,
dans lequel les renforts (25) de la troisième couche de ceinture (15) et les renforts (27) de la quatrième couche de ceinture (17), vus dans la direction périphérique U, présentent la même direction d'inclinaison axiale.

4. Pneumatique de véhicule selon les caractéristiques de la revendication 1,
dans lequel la première couche de ceinture (13), dans son étendue axiale dans le pneumatique de véhicule, est plus grosse que toutes les autres couches de ceinture (14, 15, 17) de la ceinture.

5. Pneumatique de véhicule selon les caractéristiques de l'une des revendications précédentes,
dans lequel la deuxième couche de ceinture (14), dans son étendue axiale dans le pneumatique de véhicule, est plus petite que la première et la troisième couche de ceinture (13, 15) et est au moins 0,9 fois et au plus 1,1 fois plus large que l'étendue axiale de la quatrième couche de ceinture (17) de la ceinture.

6. Pneumatique de véhicule selon les caractéristiques d'une ou plusieurs des revendications précédentes, dans lequel les renforts (23) de la première couche de ceinture (13) et les renforts (25) de la troisième couche de ceinture (15) sont des câbles d'acier.

7. Pneumatique de véhicule selon les caractéristiques d'une ou plusieurs des revendications précédentes, dans lequel les renforts (23, 25) des deux couches de travail (13, 15) dans le pneu sont réalisés de manière extensible avec un allongement D, avec D ≥ 0,2 % à 10 % de la force de rupture.

8. Pneumatique de véhicule selon les caractéristiques d'une ou plusieurs des revendications précédentes, dans lequel les renforts (24) de la deuxième couche de ceinture (14) sont des renforts en acier.

9. Pneumatique de véhicule selon les caractéristiques de la revendication une ou plusieurs des revendications précédentes,
dans lequel les renforts (24) de la deuxième couche de ceinture (14) sont des câbles d'acier, qui présentent, à 10 % de la force de rupture, un allongement D avec D ≥ 0,2 %, en particulier avec D ≥ 1 %.

10. Pneumatique de véhicule selon les caractéristiques d'une ou plusieurs des revendications précédentes, dans lequel les renforts (27) de la quatrième couche de ceinture (17) sont des câbles d'acier.
